# EUROPEAN PATENT APPLICATION

(11) **EP 3 979 098 A1**
(43) Date of publication of application: **06.04.2022**
(21) Application number: 20814490.7
(22) Date of filing: 20.03.2020
(51) Int. Cl.: G06F 16/483

(54) **DATA PROCESSING METHOD AND APPARATUS, STORAGE MEDIUM, AND ELECTRONIC APPARATUS**

(30) Priority: 31.05.2019 CN 201910472128
(71) Applicant: TENCENT TECHNOLOGY (SHENZHEN) COMPANY LIMITED, Shenzhen, GUANGDONG 518057, (CN)
(72) Inventor: FU, Canmiao, Shenzhen, Guangdong 518057, (CN); CAO, Qiong, Shenzhen, Guangdong 518057, (CN); PEI, Wenjie, Shenzhen, Guangdong 518057, (CN); SHEN, Xiaoyong, Shenzhen, Guangdong 518057, (CN); TAI, Yuwing, Shenzhen, Guangdong 518057, (CN); JIA, Jiaya, Shenzhen, Guangdong 518057, (CN)
(74) Representative: Eisenführ Speiser
(86) International application number: PCT/CN2020/080301
(87) International publication number: WO 2020/238353

(57) **Abstract**

A data processing method, comprising: acquiring target sequence data, the target sequence data comprising N groups of data that are sorted in chronological order; according to an ith group of data among the N groups of data, a processing result of a target neural network model on the ith group of data, and a processing result of the target neural network model on jth data in an i+1th group of data, using the target neural network model to process j+1th data in the i+1th group of data so as to obtain a processing result of the target neural network model on the j+1th data in the i+1th group of data.

## Description

This application claims priority to Chinese Patent Application No. 201910472128.0, entitled "DATA PROCESSING METHOD AND APPARATUS, STORAGE MEDIUM, AND ELECTRONIC APPARATUS" filed with the National Intellectual Property Administration, PRC on May 31, 2019, which is incorporated herein by reference in its entirety.

### FIELD

The present disclosure relates to the field of computers, and in particular, to a data processing method, a data processing apparatus, a storage medium and an electronic device.

### BACKGROUND

Currently, data sequence modeling is applicable to visual processing (for example, video understanding and classification and abnormal action detection), text analysis (for example, emotion classification), a dialog system, and the like.

Sequence modeling may be performed by using image models. The image models may be classified into two categories: generation models (generative image models) and discrimination models (discriminative image models). A hidden Markov model, as an example of a generation model, may model a potential particular feature for a data sequence in a chain. The discrimination model models a distribution of all category labels according to input data. An example of the discrimination model is a conditional random field.

The sequence model may extract information on a time series based on a recurrent neural network (RNN), for example, perform sequence modeling based on an RNN/long short-term memory (LSTM), which shows excellent performance in many tasks. Compared with the image model, the RNN is easier to be optimized and has a better time modeling capability.

However, a current sequence model has low accuracy in modeling, and consequently is difficult to be widely applied to scenarios such as visual processing, text analysis, and a dialog system.

### SUMMARY

A data processing method and a data processing apparatus, a storage medium, and an electronic device are provided according to embodiment of the present disclosure, to resolve at least the technical problem in the related art that a sequence model has low accuracy in modeling, and consequently is difficult to be widely applied.

According to an aspect of the embodiments of the present disclosure, a data processing method is provided, including: obtaining a target data sequence, the target data sequence including N data groups sorted in a chronological order, N being greater than 1; and processing, according to an i^{th} data group among the N data groups, processing results of a target neural network model for the i^{th} data group, and a processing result of the target neural network model for a j^{th} piece of data in an (i+1)^{th} data group, a (j+1)^{th} piece of data in the (i+1)^{th} data group by using the target neural network model, to obtain a processing result of the target neural network model for the (j+1)^{th} piece of data in the (i+1)^{th} data group, i being greater than or equal to 1 and less than N, and j being greater than or equal to 1 and less than Q, Q being a quantity of pieces of data in the (i+1)^{th} data group.

According to another aspect of the embodiments of the present disclosure, a data processing apparatus is further provided, including: a communication module, configured to obtain a target data sequence, the target data sequence including N data groups sorted in a chronological order, N being greater than 1; and a processing module, configured to process, according to an i^{th} data group among the N data groups, processing results of a target neural network model for the i^{th} data group, and a processing result of the target neural network model for a j^{th} piece of data in an (i+1)^{th} data group, a (j+1)^{th} piece of data in the (i+1)^{th} data group by using the target neural network model, to obtain a processing result of the target neural network model for the (j+1)^{th} piece of data in the (i+1)^{th} data group, i being greater than or equal to 1 and less than N, and j being greater than or equal to 1 and less than Q, Q being a quantity of pieces of data in the (i+1)^{th} data group.

According to still another aspect of the embodiments of the present disclosure, a storage medium is further provided, the storage medium storing a computer program, and the computer program being configured to perform the foregoing method when being run.

According to still another aspect of the embodiments of the present disclosure, an electronic device is further provided. The electronic device includes a memory, a processor, and a computer program being stored on the memory and executable on the processor, the processor performing the foregoing method by using the computer program.

According to still another aspect of the embodiments of the present disclosure, a computer program product is further provided, the computer program product, when run on a computer, causing the computer to perform the foregoing data processing method.

In the embodiments of the present disclosure, the (j+1)^{th} piece of data in the (i+1)^{th} data group is processed, by using a target neural network model, according to the i^{th} data group among the N data groups included in the target data sequence, the processing results of the target neural network model for the i^{th} data group, and the processing result of the target neural network model for the j^{th} piece of data in the (i+1)^{th} data group. Because the target neural network model (for example, an LSTM model) processes inputted current data (that is, the (j+1)^{th} piece of data in the (i+1)^{th} data group) based on not only obtained information of an adjacent time step (a previous processing result, that is, the processing result for the j^{th} piece of data in the (i+1)^{th} data group), but also a previous data group of a current data group (that is, the i^{th} data group) and processing results for the previous data group (a previous group of processing results, that is, the processing results for the i^{th} data group), so that a long-term dependency relationship can be captured and modeled, thereby resolving a problem of low modeling accuracy caused by that a sequence model in the related art cannot model a long-term dependency relationship. A model obtained based on the foregoing method can be widely applied to scenarios such as visual processing, text analysis, and a dialog system.

### BRIEF DESCRIPTION OF THE DRAWINGS

The accompanying drawings described herein are used to provide a further understanding of the present disclosure, and form part of the present disclosure. Exemplary embodiments of the present disclosure and descriptions thereof are used to explain the present disclosure, and do not constitute any inappropriate limitation to the present disclosure. In the accompanying drawings:
FIG. 1 is a schematic diagram of an application environment of a data processing method according to an embodiment of the present disclosure.
FIG. 2 is a flowchart of a data processing method according to an embodiment of the present disclosure.
FIG. 3 is a schematic diagram of a data processing method according to an embodiment of the present disclosure.
FIG. 4 is a schematic diagram of a data processing method according to another embodiment of the present disclosure.
FIG. 5 is a schematic diagram of a data processing method according to another embodiment of the present disclosure.
FIG. 6 is a schematic diagram of a data processing method according to another embodiment of the present disclosure.
FIG. 7 is a schematic diagram of a data processing method according to another embodiment of the present disclosure.
FIG. 8 is a schematic diagram of a data processing method according to another embodiment of the present disclosure.
FIG. 9 is a schematic diagram of a data processing method according to another embodiment of the present disclosure.
FIG. 10 is a schematic diagram of a data processing method according to another embodiment of the present disclosure.
FIG. 11 is a schematic structural diagram of a data processing apparatus according to an embodiment of the present disclosure.
FIG. 12 is a schematic structural diagram of an electronic device according to an embodiment of the present disclosure.

### DESCRIPTION OF EMBODIMENTS

To make a person skilled in the art better understand the solutions of the present disclosure, the following clearly and completely describes the technical solutions in the embodiments of the present disclosure with reference to the accompanying drawings in the embodiments of the present disclosure. Apparently, the described embodiments are only some rather than all of the embodiments of the present disclosure. All other embodiments obtained by a person of ordinary skill in the art based on the embodiments of the present disclosure without creative efforts shall fall within the protection scope of the present disclosure.

In this specification, claims, and accompanying drawings of the present disclosure, the terms "first", "second", and so on are intended to distinguish similar objects but do not necessarily indicate a specific order or sequence. It is to be understood that the data termed in such a way are interchangeable in appropriate circumstances, so that the embodiments of the present disclosure described herein can be implemented in orders other than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, product, or device.

A sequence model in the related art can only capture information in adjacent time steps in a sequence, and explicitly model first-order information exchange between adjacent time steps in the sequence. Because high-order information exchange between non-adjacent time steps cannot be captured, the high-order information exchange between non-adjacent time steps is not fully used.

In an actual application, there may be thousands of time steps in one data sequence, and in first-order information exchange, because information cannot be processed due to gradual dilution and gradient diffusion over time, a long-term dependency relationship cannot be modeled. This limits a modeling capability of the model for long-term dependency data, and consequently limits a processing capability of the model for a long-time dependency problem.

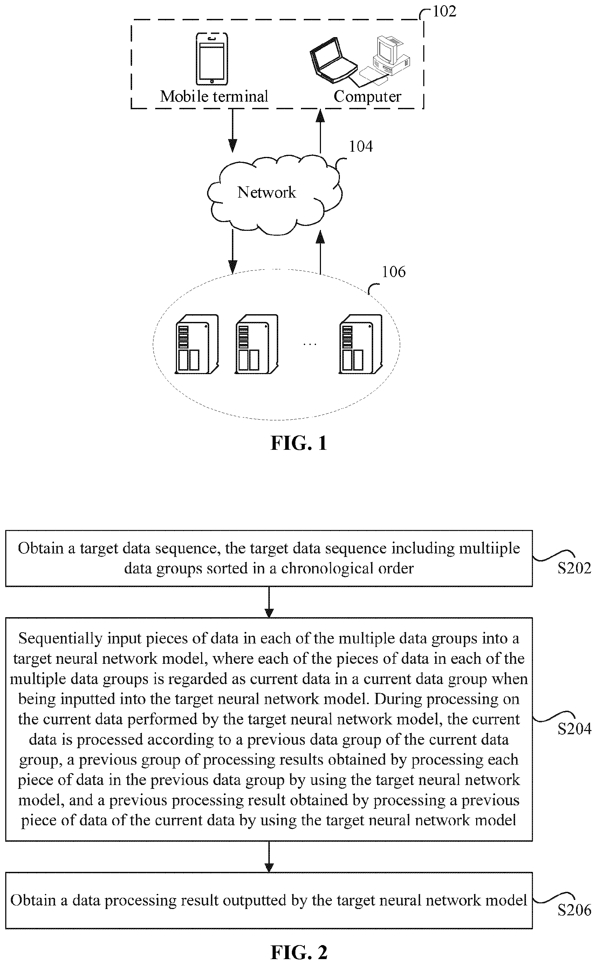

To resolve the foregoing problems, according to an aspect of the embodiments of the present disclosure, a data processing method is provided. In an embodiment, the data processing method may be applied to an application environment shown in FIG. 1, but the present disclosure is not limited thereto. As shown in FIG. 1, the data processing method relates to interaction between a terminal device 102 and a server 106 by using a network 104.

The terminal device 102 may collect a target data sequence or obtain a target data sequence from another device, and send the target data sequence to the server 106 by using the network 104, the target data sequence including multiple data groups sorted in a chronological order.

After obtaining the target data sequence, the server 106 may sequentially input pieces of data in each of the multiple data groups into a target neural network model, and obtain a data processing result outputted by the target neural network model. During processing on current data performed by the target neural network model, the current data is processed according to a previous data group of a current data group, a previous group of processing results obtained by processing each piece of data in the previous data group by using the target neural network model, and a previous processing result obtained by processing a previous piece of data of the current data by using the target neural network model.

In an embodiment, after obtaining the data processing result, the server 106 may determine an execution result of a target task according to the data processing result, and send the determined execution result to the terminal device 104 by using the network 104. The terminal device 104 stores the execution result, and may further present the execution result.

FIG. 1 provides a description by using an example in which the server 106 performs, by using the target neural network model, the foregoing processing on each piece of data included in each data group in the target data sequence (including N data groups sorted in a chronological order, N being greater than 1). In some possible implementations, during processing, the server 106 may determine an execution result of a target task based on a processing result for a piece of data in a data group, and the server 106 may not perform a processing procedure on data after the piece of data in the target data sequence, and end a current processing process.

That is, the server 106 may perform the foregoing processing procedure for a part of data in the target data sequence by using the target neural network model. For ease of understanding, a description is made below by using a processing procedure for a (j+1)^{th} piece of data in an (i+1)^{th} data group.

The server 106 first obtains an i^{th} data group and processing results of the target neural network model for the i^{th} data group, and obtains a processing result of the target neural network model for a j^{th} piece of data in an (i+1)^{th} data group. Then the server 106 processes the (j+1)^{th} piece of data in the (i+1)^{th} data group by using the target neural network model, according to the i^{th} data group, the processing results of the target neural network model for the i^{th} data group, and the processing result of the target neural network model for the j^{th} piece of data in the (i+1)^{th} data group, to obtain a processing result of the target neural network model for the (j+1)^{th} piece of data in the (i+1)^{th} data group.

i is greater than or equal to 1 and less than N, and j is greater than or equal to 1 and less than Q, Q being a quantity of pieces of data in the (i+1)^{th} data group.

For a first data group, a previous data group of the first data group and processing results for the previous data group may be regarded as 0, and the above processing may be performed. For a first piece of data in each data group, a processing result for a previous piece of data of the first piece of data may be regarded as 0, and the above processing may be performed.

The target task may include, but is not limited to, video understanding and classification, abnormal action detection, text analysis (for example, emotion classification), a dialog system, and the like.

In an embodiment, the terminal device may include, but is not limited to, at least one of the following: a mobile phone, a tablet computer, and the like. The network may include, but is not limited to, at least one of the following: a wireless network and a wired network. The wireless network includes: Bluetooth, wireless-fidelity (Wi-Fi), and another network implementing wireless communication. The wired network may include: a local area network, a metropolitan area network, a wide area network, and the like. The server may include, but is not limited to, at least one of the following: a device configured to process a target sequence model by using the target neural network model. The foregoing description is merely an example, and no limitation is imposed in this embodiment.

In an embodiment, in an implementation, as shown in FIG. 2, the data processing method may include the following steps S202 to S206.

In step S202, a target data sequence is obtained, the target data sequence including N data groups sorted in a chronological order.

In step S204, pieces of data in each of the N data groups are sequentially inputted into a target neural network model, where each of the pieces of data in each of the N data groups is regarded as current data in a current data group when being inputted into the target neural network model. During processing on the current data performed by the target neural network model, the current data is processed according to a previous data group of the current data group, a previous group of processing results obtained by processing each piece of data in the previous data group by using the target neural network model, and a previous processing result obtained by processing a previous piece of data of the current data by using the target neural network model.

In step S206, a data processing result outputted by the target neural network model is obtained.

Similar to FIG. 1, FIG. 2 provides a description by using an example in which the foregoing processing is performed on each piece of data in the N data groups in the target data sequence. During an actual application, the foregoing processing may be performed on several pieces of data in the target data sequence. This is not limited in this embodiment.

In an embodiment, the data processing method may be applied to a process of executing a target task by using a target neural network, but the present disclosure is not limited thereto. The target task may be to determine an execution result of a target task according to time series information of the target data sequence. For example, the target task may be video understanding and classification, abnormal action detection, text analysis (for example, emotion classification), a dialog system, or the like.

Action classification is used as an example. Video data is a data sequence, and each piece of data is a video frame (a video image). The video data is inputted into the target neural network, to obtain a processing result for the video data. An action performed by an object in the video data for example, walking toward each other, may be determined from a group of actions according to the processing result for the video data.

Emotion recognition is used as an example. Sentences and words in each sentence in text data (for example, a commodity comment where a commodity may be an actual product, a virtual service, or the like) are organized in an order, and the text data may be regarded as data sorted in a chronological order. The text data is inputted into the target neural network model, to obtain a processing result for the text data. An emotion tendency of the text data, for example, a positive emotion (positive comment) or a negative emotion (negative comment), may be determined from a group of emotions according to the processing result for the text data.

The data processing method in this embodiment is described below with reference to FIG. 2.

In step S202, a target data sequence is obtained, the target data sequence including N data groups sorted in a chronological order.

A server (or a terminal device) may be configured to execute a target task. The target task may be: video understanding and classification (for example, action recognition), text analysis (emotion analysis), or a dialog system. The server may analyze a target data sequence related to the target task, to determine an execution result of the target task.

The target data sequence may include a multiple pieces of data sorted in a chronological order. The target data sequence may be sorted in the chronological order in many manners. For example, for video data, video frames (images) in the video data are sorted in a chronological order; and for text data, phrases may be sorted in an order in which the phrases in text appear. A phrase is a language unit that can be independently used. A phrase may be a single-word phrase such as "me" or "hill", and may alternatively be a non-single-word phrase such as "fond for" or "social society". At least one phrase may be combined to form an expression, at least one expression may be combined in sequence to form a sentence, and at least one sentence may be combined in sequence to form text.

In an implementation, the obtaining target data sequence includes: obtaining target video data, the target video data including N video frame groups sorted in a chronological order, and the target video data being used for recognizing an action performed by a target object in the target video data.

In an implementation, the obtaining target data sequence includes: obtaining target text data, the target text data including at least one sentence, the at least one sentence including N phrases arranged in an order, and the target text data being used for recognizing an emotion type expressed by the target text data.

By using the foregoing technical solutions according to the embodiments of the present disclosure, different target data sequences are obtained for different types of target tasks, to meet requirements of different types of tasks, thereby improving applicability of the sequence model.

After the target data sequence is obtained, the target data sequence may be divided into groups. The target data sequence may be divided into multiple data groups in a chronological order.

In an embodiment, after the target data sequence is obtained, a target sliding window that slides at a target stride is applied to the target data sequence, to obtain the multiple data groups.

To ensure processing efficiency of the sequence model, a size of the target sliding window may be set to be the same as the target stride. To ensure processing accuracy of the sequence model, the size of the target sliding window may be set to be greater than the target stride.

For different types of target data sequences or different target data sequences, the size and the target stride of the used target sliding window may be the same or different. The same target data sequence may be sampled by using target sliding windows having multiple sizes and multiple target strides.

In an embodiment, acquisition of the target data sequence (sliding of the target sliding window) and data processing performed by using the target neural network model may be sequentially performed. Each time the target sliding window slides, a data group is obtained, and the data group is processed by using the target neural network model. After the data group is processed by using the target neural network model, the size of the target sliding window and the target stride may be adjusted (may alternatively not be adjusted), to obtain a next data group, and the next data group is processed by using the target neural network model, until all of the target data sequence is processed.

For the last data group in the target data sequence, a quantity of pieces of data included in the last data group may be less than the size of the target sliding window. Because data is sequentially inputted into the target neural network model for processing, the quantity of pieces of data included in the last data group does not affect processing on the data by the target neural network model.

By using the foregoing technical solutions in the embodiment of the present disclosure, the target sliding window that slides at the target stride is applied to the target data sequence, to obtain multiple data groups, which facilitates dividing the target data sequence into groups, thereby improving processing efficiency for the target data sequence.

In step S204, pieces of data in each of the multiple data groups are sequentially inputted into the target neural network model, where each piece of data in each data group is regarded as current data in a current data group when being inputted into the target neural network model; and during processing on the current data performed by the target neural network model, the current data is processed according to a previous data group of the current data group, a previous group of processing results obtained by processing each piece of data in the previous data group by using the target neural network model, and a previous processing result obtained by processing a previous piece of data of the current data by using the target neural network model.

After the multiple data groups (all or some of the multiple data groups) are obtained, pieces of data in each of the multiple obtained data groups may be sequentially inputted into the target neural network model for processing the pieces of data by using the target neural network model.

The target neural network model has the following feature: sequentially processing pieces of inputted data as the current data according to at least the processing result for the previous piece of captured data. The target neural network model may be a Recurrent Neural Network model (RNN), and a used recurrent neural network may include at least one of the following: an RNN, an LSTM, a high-order RNN, and a high-order LSTM.

For the first data group among the multiple data groups, pieces of data in the first data group may be sequentially inputted as the current data into the target neural network model, and the current data may be processed by using a processing result for a previous piece of data of the current data (a previous processing result), to obtain a processing result for the current data (a current processing result). When the current data is the first piece of data in the first data group, the current data is inputted into the target neural network model for processing the current data.

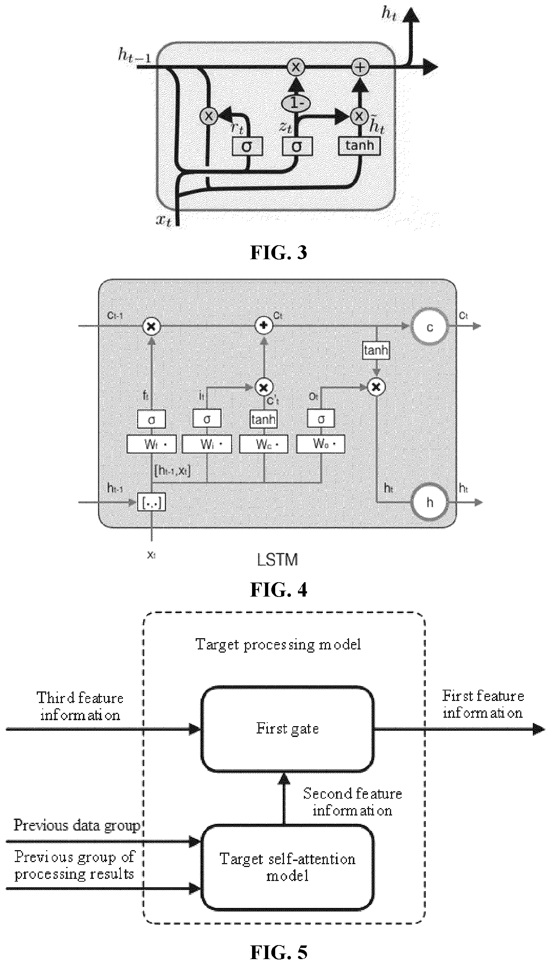

For example, in a case that the target neural network model includes an RNN (as shown in FIG. 3), a processing result obtained by processing the first data group by using the target neural network model is the same as a processing result obtained by processing the first data group by using the RNN included in the target neural network model.

For example, in a case that the target neural network model includes an LSTM, a processing result obtained by processing the first data group by using the target neural network model is the same as a processing result obtained by processing the first data group by using the LSTM (as shown in FIG. 4).

In an embodiment, the sequentially inputting pieces of data in each of the multiple data groups into a target neural network model may include: obtaining a previous data group, a previous group of processing results, and a previous processing result; and inputting current data into the target neural network model, to obtain a current processing result that is outputted by the target neural network model and that corresponds to the current data, where during processing on the current data performed by the target neural network model, the current data is processed according to the previous data group, the previous group of processing results, and the previous processing result.

By using the foregoing technical solutions in this embodiment of the present disclosure, the previous data group, the previous group of processing results (a group of processing results obtained by processing each piece of data in the previous data group by using the target neural network model), and the previous processing result (a processing result obtained by processing the previous piece of data by using the target neural network model) are obtained, and the current data is processed according to the previous data group, the previous group of processing results, and the previous processing result by using the target neural network model, to obtain the processing result corresponding to the current data. In this way, processing on the current data can be completed, thereby completing a processing process of the target neural network model.

For a data group (a current data group) in the multiple data groups other than the first data group, a previous data group of the current data, a previous group of processing results obtained by processing each piece of data in the previous data group by using the target neural network model (each piece of data in the previous data group and each processing result in the previous group of processing results may be in a one-to-one correspondence), and a previous processing result obtained by processing a previous piece of data of the current data by using the target neural network model may be first obtained.

The previous data group and the previous group of processing results may be used as a whole (for example, high-dimensional feature information of the previous data group is extracted) acting on the target neural network model: the previous data group and the previous group of processing results may be first processed by using a target processing model, to obtain target feature information (first feature information).

The target feature information may be obtained according to the previous data group and the previous group of processing results: the previous data group and the previous group of processing results may be inputted into a target self-attention model in the target processing model, to obtain second feature information that is outputted by the target self-attention model and that corresponds to the previous data group. The second feature information may be outputted as target feature information.

Because the target feature information is generated based on the previous data group and the processing results of the previous data group, information of the data sequence can be circulated among multiple data segments. Therefore, a longer-term dependency relationship can be captured, thereby modeling global interaction among the data segments.

In addition to the second feature information, the target feature information may alternatively be obtained according to processing results of one or more data groups previous to the previous data group.

In an embodiment, the inputting current data into the target neural network model, to obtain a current processing result that is outputted by the target neural network model and that corresponds to the current data includes: obtaining first feature information that is outputted by a target processing model and that corresponds to a previous data group and a previous processing result, the target processing model including a target self-attention model and a first gate, the first feature information being obtained by inputting second feature information and third feature information into the first gate, the second feature information being obtained by inputting the previous data group and the previous group of processing results into the target self-attention model, the third feature information being feature information that is outputted by the target processing model and that corresponds to the previous data group, the third feature information being intra-group feature information of the previous data group (the i^{th} data group), and the first feature information being feature information that is outputted by the target processing model and that corresponds to the current data group, and being intra-group feature information of the current data group (the (i+1)^{th} data group), and the first gate being configured to control a proportion of the second feature information outputted to the first feature information and a proportion of the third feature information outputted to the first feature information; and inputting the current data into the target neural network model, to obtain a current processing result, where during processing on the current data performed by the target neural network model, the current data is processed according to the first feature information and the previous processing result.

In addition to the second feature information, the target feature information may further be generated according to the feature information (third feature information) corresponding to the previous data group that is outputted by the target processing model.

For example, as shown in FIG. 5, the previous data group (the i^{th} data group) and the previous group of processing results (processing results for the i^{th} data group) are inputted into the target self-attention model in the target processing model, to obtain the second feature information; and the second feature information and the third feature information obtained by processing the previous data group by using the target processing model are inputted into the first gate. The first gate controls parts of the second feature information and the third feature information that are outputted to the first feature information (the first gate controls which information is retained, a retaining degree, and which information is discarded), to obtain the first feature information (the target feature information).

By using the foregoing technical solutions in this embodiment of the present disclosure, a relationship between the previous data group and the previous group of processing results and an information matching degree between processing results among the previous group of processing results are modeled by using the target self-attention model, and the first gate is used to control an information circulation among data sequence segments, thereby ensuring accuracy in modeling of a long-term dependency relationship.

After the first feature information is obtained, the obtained first feature information may be sequentially used in a process of processing each piece of data of the current data group by using the target neural network model.

In an embodiment, in a process of inputting the current data into the target neural network model, to obtain the current processing result, the first feature information and the current data may be inputted into a second gate, to obtain a target parameter, the second gate being configured to control a proportion of the first feature information outputted to the target parameter and a proportion of the current data outputted to the target parameter; and the target parameter may be inputted into the target neural network model, to control an output of the target neural network model.

By using the foregoing technical solutions in this embodiment of the present disclosure, a gate (the second gate) is provided in the target neural network, to introduce target feature information for updating a current hidden state, so that long-distance sequence information can also be well captured in a current time step.

In step S206, a data processing result outputted by the target neural network model is obtained.

After each piece of data in the target data sequence is processed, a processing result of the target neural network model for the last piece of data may be outputted as a final result of the processing on the target data sequence.

After the data processing result outputted by the target neural network model is obtained, the data processing result may be analyzed, to obtain an execution result of the target task. The target task may include, but is not limited to, information flow recommendation, video understanding, a dialog system, emotion analysis, and the like.

In an implementation, after the data processing result (which may be a processing result for a piece of data in the target data sequence, including a processing result for the last piece of data) outputted by the target neural network model is obtained, first probability information (which may include multiple probability values respectively corresponding to reference actions in a reference action set) may be determined according to the data processing result, the first probability information representing probabilities that an action performed by a target object is respective reference actions in a reference action set; and it is determined according to the first probability information that the action performed by the target object is a target action in the reference action set.

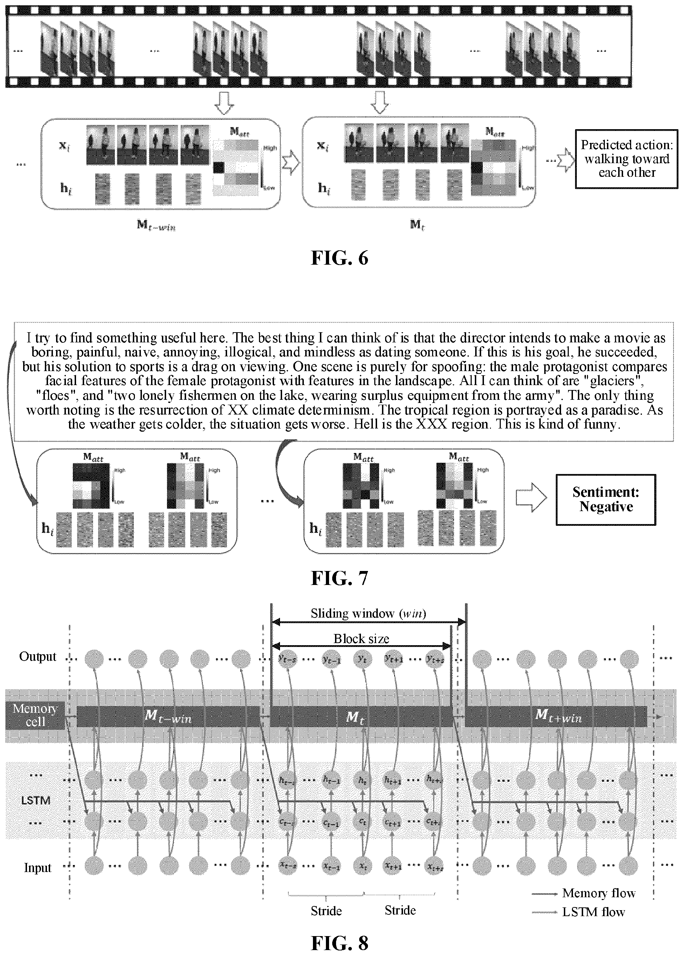

The above data processing method is described below with reference to examples. As shown in FIG. 6, the target data sequence is a segment of video data. The video data includes multiple video frames. The target task is to recognize an action of a person in the video clip. An action shown in the video in this example is "walking toward each other".

The multiple video frames are divided into multiple video frame groups according to a size of a sliding window in a manner in which every N video frames form one group (for example, every five or ten video frames form one group). Video frames in each of the multiple video frame groups are sequentially inputted into the target neural network model. For each video frame group, after the last video frame is processed, second feature information may be obtained according to an inputted video frame (x*ᵢ*) and an outputted processing result (h*ᵢ*), and further, first feature information is obtained. After all the video frames are processed, the action shown in the video is predicted, according to a processing result for the last video frame, to be "walking toward each other".

A change of a relative distance between two people over time is a key to behavior recognition, and the target neural network model can successfully capture the change of the relative distance between the two people over time, so that the action can be correctly recognized. For models such as an LSTM, because the change of the relative distance between the two people over time cannot be successfully captured, the action cannot be correctly recognized. Instead, the action is mistakenly recognized as "hitting each other".

In another implementation, after the data processing result (which may be a processing result for a piece of data in the target data sequence, including a processing result for the last piece of data) outputted by the target neural network model is obtained, second probability information (which may include multiple probability values respectively corresponding to reference emotion types in a reference emotion type set) may be determined according to the data processing result, the second probability information being used for representing probabilities that an emotion type expressed by target text data is respective reference emotion types in the reference emotion type set; and it is determined according to the second probability information that the emotion type expressed by target text data is a target emotion type in the reference emotion type set.

The above data processing method is described in combination with an example. As shown in FIG. 7, the target data sequence is a comment. The comment includes multiple sentences. The target task is to recognize an emotion type of a particular comment. An emotion type of the comment in this example is "negative".

The comment is divided into multiple sentence groups according to a size of a sliding window in a manner in which every N sentences form one group (for example, every two or three sentences form one group). Actually, the sentence group may alternatively be a combination of words. Therefore, the sentence group may alternatively be regarded as a phrase group. Sentences in each of the multiple sentence groups are sequentially inputted into the target neural network model. For each sentence group, after the last sentence is processed, the second feature information may be obtained according to an inputted sentence (x*ᵢ*) and an outputted processing result (h*ᵢ*), and further, the first feature information is obtained. After all the sentences are processed, the emotion type of the comment is predicted according to the processing result for the last sentence to be negative.

For this comment, the first several sentences ("I try to ... someone") are an important clue for a negative comment tendency. Because the sentences are easy to be forgotten by a hidden state *h_{T}* in the last time step, the sentences are difficult to be captured by an LSTM. The last several sentences (The only thing worth noting is ... It's kind of funny) in the comment show a positive comment tendency, which misleads the LSTM model in recognition. Consequently, the LSTM model recognizes an emotion type of the comment as positive.

By using the foregoing technical solutions in this embodiment of the present disclosure, execution results of different types of target tasks are determined for the target tasks, so that requirements of different types of tasks can be met, thereby improving applicability of the sequence model.

In this embodiment, pieces of data in the target data sequence are sequentially inputted into the target neural network model, and the target neural network model processes the current data according to the previous data group of the current data group, the previous group of processing results obtained by processing the previous data group by using the target neural network model, and the previous processing result obtained by processing the previous piece of data of the current data by using the target neural network model; and the data processing result outputted by the target neural network model is obtained, so that a problem that a sequence model in the related art cannot model a long-term dependency relationship is resolved, and a long-term dependency relationship is captured, thereby modeling the long-term dependency relationship.

FIG. 6 shows a processing result for the last video frame. FIG. 7 provides a description by using the processing result for the last sentence as an example. During an actual application, the server 106 may execute the foregoing task based on processing results of other video frames or other sentences.

The data processing method is described below with reference to examples. For the defect that a long-distance time dependency relationship cannot be processed by using a current sequence modeling algorithm, the target neural network model used in the data processing method in this example may be an LSTM model based on local recurrent memory.

The target neural network model may perform full-order modeling in a data sequence segment and model global interaction among data sequence segments. As shown in FIG. 8, the target neural network model mainly includes two parts: a nonlocal recurrent memory cell (Memory) and a sequence model (sequence modeling).

### (1) Nonlocal recurrent memory cell (Memory)

The nonlocal recurrent memory cell is capable of learning high-order interaction between hidden states of the target neural network model (for example, an LSTM) in different time steps within each data sequence segment (memory block). In addition, the global interaction between memory blocks is modeled in a gated recurrent manner. A memory state learned from each memory block acts on a future time step in return, and is used for tuning a hidden state of the target neural network model (for example, an LSTM), to obtain a better feature representation.

The nonlocal recurrent memory cell may be configured to process full-order interaction within a data sequence segment, extract high-dimensional features (for example, *M_{t-win}, Mₜ,* and*M_{t+win})* within the data segment, and implement memory flows (for example, *M_{t-win}* → *Mₜ → M_{t+win}* and *M_{t-win}* → *Cₜ, C*_{*t*-1}) among data segments.

*M_{t-win}, Mₜ,* and *M_{t+win}* shown in FIG. 8 are nonlocal recurrent memory cells corresponding to different inputted data groups. As shown in FIG. 8, a memory cell corresponding to a previous data group may act on a processing process of each piece of data in a current data group.

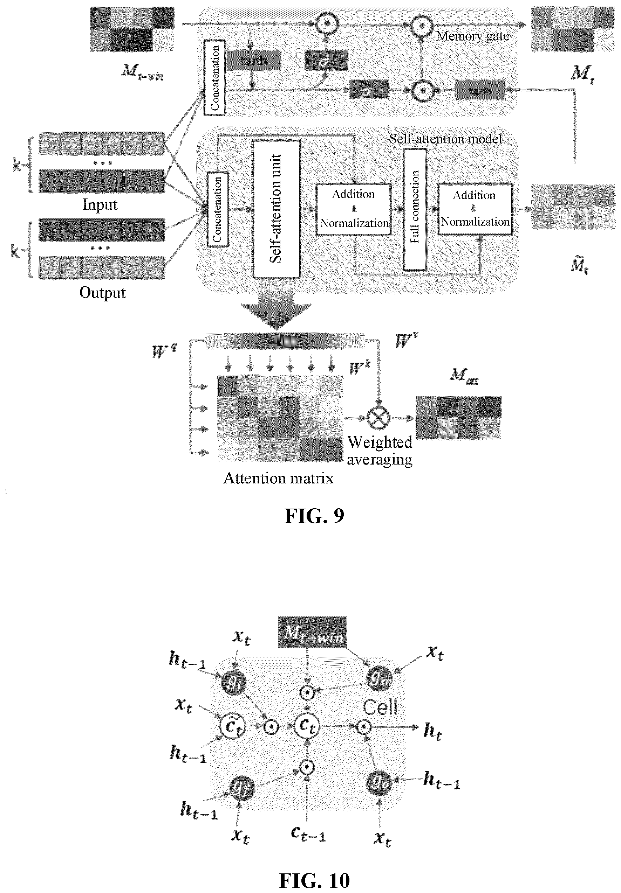

Within a data sequence segment (data group with a block size shown in FIG. 8), considering input data x and an output h of an LSTM model, the nonlocal recurrent memory cell may implicitly model a relationship between the input data x and the output h of the LSTM model and an information matching degree between every two h's by using a self-attention mechanism (as shown in FIG. 9), to obtain a current high-dimensional feature *M̃ₜ*, and simultaneously control information circulation among data sequence segments by using a memory gate.

A structure of the nonlocal recurrent memory cell may be as shown in FIG. 9. The nonlocal recurrent memory cell may include two parts: a self-attention model (which is also referred to as an attention module, of which a function is the same as that of the foregoing target self-attention model), configured to model a relationship between input information and purify features; and a memory gate (of which a function is the same as that of the foregoing first gate), configured to control flowing of information on different time steps, to avoid information redundancy and overfitting.

As shown in FIG. 9, a process of obtaining *Mₜ* corresponding to a current data group (a current data segment, *xₜ₋ₛ...xₜ...xₜ₊ₛ)* by the nonlocal recurrent memory cell is as follows.

First, a previous data group (inputs, *xₜ₋ₛ... xt... xₜ₊ₛ)* and a previous group of processing results (outputs, hidden states, *hₜ₋ₛ... ht... hₜ₊ₛ)* are inputted into the self-attention model, to obtain *M̃ₜ* .

After obtaining the inputs (each input may be represented as a feature vector) and the hidden states (each hidden state may be represented as a feature vector), the self-attention model may concatenate (Concat) the inputs and the hidden states, to obtain a first concatenated data (AttentionMask, an attention matrix, which may be represented as a feature vector matrix).

Self-attention processing is performed on the first concatenated data. The first concatenated data (AttentionMask) is processed according to importance of feature vectors, to perform association between the feature vectors, which may include: using three predefined parameter matrices *W^{q}*, *W^{k}*, and *W^{v}* to process the AttentionMask, to obtain *Mₐₜₜ,* where *Mₐₜₜ* is an attention weight matrix of visual memory blocks.

*After Mₐₜₜ* is obtained, addition and normalization (Add&Norm) may be performed on *Mₐₜₜ* and AttentionMask, to obtain second concatenated data; the second concatenated data is fully connected, to obtain third concatenated data; and then addition and normalization (Add&Norm) are performed on the second concatenated data and the third concatenated data, to obtain *M̃ₜ*.

Then *Mₜ* is obtained according to *M̃ₜ* , or *M_{t-win}* and *M̃ₜ.*

In an implementation, after *M̃ₜ* is obtained, *M̃*ₜ may be outputted as *Mₜ.*

A sequence model in the related art performs processing for adjacent time steps, and cannot perform long-time span modeling. In the technical solution in this example, the target neural network model may perform modeling of high-order information, that is, can perform full-order modeling on interaction among all time steps within a data sequence segment, and can also model global interaction among data segments. Therefore, the target neural network model can capture a longer-term dependency relationship.

In another implementation, after *M̃*ₜ is obtained, *M_{t-win}* and *M̃ₜ* may be inputted into a memory gate (of which a function is the same as the foregoing first gate), and an output of the memory gate is used as *Mₜ.* The memory gate controls information circulation among data sequence segments.

By using the technical solution in this example, the target neural network model can learn potential high-dimensional features included in high-order interaction between non-adjacent time steps, thereby enhancing high-dimensional feature extraction.

### (2) Sequence model (sequence modeling)

The nonlocal recurrent memory cell may be embedded into a current data sequence processing model, for example, an LSTM, to improve a long data sequence modeling capability of the current data sequence processing model.

The nonlocal recurrent memory cell (also referred to as a nonlocal memory cell) is capable of being seamlessly integrated into an existing sequence model having a recursive structure, for example, an RNN, a GRU, or an LSTM (FIG. 8 shows a target neural network model obtained by embedding the nonlocal memory cell into an LSTM model), so that a sequence modeling capability in an existing sequence model (for example, video understanding and a dialog system) can be enhanced, and peer-to-peer training can be performed on an integrated model. Therefore, the nonlocal recurrent memory cell can have a good migration capability.

For example, the nonlocal recurrent memory cell can be seamlessly integrated into a model on a current service line (for example, an LSTM), to reduce costs of secondary development to the utmost extent. As shown in FIG. 10, an LSTM is used as an example. A gate gₘ (of which a function is the same as that of the second gate) is directly added to an LSTM model by modifying a cell of the LSTM, to introduce *M_{t-win}* for updating a current hidden state, so that long-distance sequence information can also be well captured in a current time step.

For each update of information, information *M_{t-win}* of a previous data sequence segment is referred, to ensure that information can be circulated among data sequence segments, that is, a relationship on a long-distance sequence can be captured, thereby effectively improving performance of the model. In addition, the nonlocal recurrent memory cell can be quite conveniently embedded into the current model, thereby reducing development costs to the utmost extent.

In addition, to avoid overfitting and information redundancy, the target neural network model also supports information sampling based on different strides, and further supports dynamic (sliding window) feature updating.

In the technical solution in this example, by using a nonlocal recurrent memory network, a sequence model can model full-order interaction in a nonlocal operation manner within a data sequence segment, and update information in a gated manner among data sequence segments to model global interaction, so that a long-term dependency relationship can be captured, and potential high-dimensional features included in high-order interaction can be further purified.

For ease of description, the foregoing method embodiments are stated as a combination of a series of actions. However, a person skilled in the art is to learn that the present disclosure is not limited to the described action sequence, because according to the present disclosure, some steps may be performed in another sequence or simultaneously. In addition, a person skilled in the art is also to understand that the embodiments described in this specification are all exemplary embodiments, and the involved actions and modules are not necessarily required to the present disclosure.

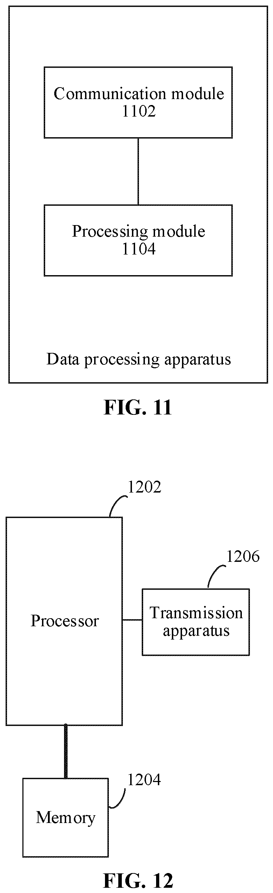

According to another aspect of the embodiments of the present disclosure, a data processing apparatus configured to perform the data processing method is further provided. As shown in FIG. 11, the apparatus includes:
(1) a communication module 1102, configured to obtain a target data sequence, the target data sequence including N data groups sorted in a chronological order, N being greater than 1; and
(2) a processing module 1104, configured to process, according to an i^{th} data group among the N data groups, processing results of a target neural network model for the i^{th} data group, and a processing result of the target neural network model for a j^{th} piece of data in an (i+1)^{th} data group, a (j+1)^{th} piece of data in the (i+1)^{th} data group by using the target neural network model, to obtain a processing result of the target neural network model for the (j+1)^{th} piece of data in the (i+1)^{th} data group, i being greater than or equal to 1 and less than N, and j being greater than or equal to 1 and less than Q, Q being a quantity of pieces of data in the (i+1)^{th} data group.

In an embodiment, the data processing apparatus may be applied to a process of executing a target task by using a target neural network, but the present disclosure is not limited thereto. The target task may be to determine an execution result of a target task according to information of the target data sequence on a time series. For example, the target task may be video understanding and classification, abnormal action detection, text analysis (for example, emotion classification), a dialog system, or the like.

In an embodiment, the communication module 1102 may be configured to perform step S202, and the processing module 1104 may be configured to perform step S204 and step S206.

In this embodiment, the target neural network model processes current data according to a previous data group of a current data group, a previous group of processing results obtained by processing the previous data group by using the target neural network model, and a previous processing result obtained by processing a previous piece of data of the current data by using the target neural network model, so that a problem that a sequence model in the related art cannot model a long-term dependency relationship is resolved, and a long-term dependency relationship is captured, thereby modeling the long-term dependency relationship, and improving modeling accuracy. Therefore, a model obtained by using this method can be widely applied to scenarios such as visual processing, text analysis, and a dialog system.

In an implementation, the processing module 1104 includes:
(1) a first processing unit, configured to process the i^{th} data group among the N data groups and the processing results of the target neural network model for the i^{th} data group by using a target self-attention model in a target processing model, to obtain second feature information;
(2) a second processing unit, configured to process the second feature information and third feature information by using a first gate in the target processing model, to obtain first feature information, the first feature information being intra-group feature information of the (i+1)^{th} data group, the third feature information being intra-group feature information of the i^{th} data group, the first gate being configured to control a proportion of the second feature information outputted to the first feature information and a proportion of the third feature information outputted to the first feature information; and
(3) a third processing unit, configured to process, according to the first feature information and the processing result of the target neural network model for the j^{th} piece of data in the (i+1)^{th} data group, the (j+1)^{th} piece of data in the (i+1)^{th} data group by using the target neural network model.

**In** this embodiment, a relationship between the previous data group and the previous group of processing results and an information matching degree between processing results among the previous group of processing results are modeled by using the target self-attention model, and the first gate is used to control an information circulation among data sequence segments, thereby ensuring accuracy in modeling of a long-term dependency relationship.

**In** an implementation, the third processing unit is configured to:
process the first feature information and the (j+1)^{th} piece of data in the (i+1)^{th} data group by using a second gate, to obtain a target parameter, the second gate being configured to control a proportion of the first feature information outputted to the target parameter and a proportion of the (j+1)^{th} piece of data outputted to the target parameter; and
process the target parameter by using the target neural network model.

**In** this embodiment, a gate (the second gate) is provided in the target neural network, to introduce first feature information for updating a current hidden state, so that long-distance sequence information can also be well captured in a current time step.

**In** an implementation, the apparatus further includes:
a sliding module, configured to: after the target data sequence is obtained, apply a target sliding window that slides at a target stride on the target data sequence to obtain the N data groups.

**In** this embodiment, the target sliding window that slides at the target stride is applied to the target data sequence, to obtain multiple data groups, which facilitates dividing the target data sequence into groups, thereby improving processing efficiency for the target data sequence.

**In** an implementation, the communication module 1102 is configured to:
obtain target video data, the target video data including N video frame groups sorted in a chronological order, and the target video data being used for recognizing an action performed by a target object in the target video data.

The apparatus further includes:
a first determining module, configured to determine first probability information according to a processing result for at least one video frame in at least one of the N video frame groups, the first probability information representing probabilities that the action performed by the target object is respective reference actions in a reference action set; and determine, according to the first probability information, that the action performed by the target object is a target action in the reference action set.

**In** an implementation, the communication module 1102 is configured to:
obtain target text data, the target text data including at least one sentence, the at least one sentence including N phrases arranged in an order, and the target text data being used for recognizing an emotion type expressed by the target text data.

The apparatus further includes:
a second determining module, configured to determine second probability information according to a processing result for at least one word in at least one of the N phrases, the second probability information representing probabilities that the emotion type expressed by the target text data is respective reference emotion types in a reference emotion type set; and determine, according to the second probability information, that the emotion type expressed by the target text data is a target emotion type in the reference emotion type set.

In this embodiment, different target data sequences is obtained for different types of target tasks, and execution results of the different types of target tasks are determined for the target tasks, so that requirements of different types of tasks can be met, thereby improving applicability of the sequence model.

According to still another aspect of the embodiments of the present disclosure, a storage medium is further provided, the storage medium storing a computer program, the computer program being configured to perform steps in any one of the foregoing method embodiments when being run.

In an embodiment, the storage medium may be configured to store a computer program for performing the following steps S1 and S2.

In step S1, a target data sequence is obtained, the target data sequence including N data groups sorted in a chronological order, N being greater than 1.

In Step S2, a (j+1)^{th} piece of data in an (i+1)^{th} data group is processed by using the target neural network model, according to an i^{th} data group among the N data groups, processing results of a target neural network model for the i^{th} data group, and a processing result of the target neural network model for a j^{th} piece of data in the (i+1)^{th} data group, to obtain a processing result of the target neural network model for the (j+1)^{th} piece of data in the (i+1)^{th} data group, i being greater than or equal to 1 and less than N, and j being greater than or equal to 1 and less than Q, Q being a quantity of pieces of data in the (i+1)^{th} data group.

A person of ordinary skill in the art may understand that all or some of the steps of the methods in the foregoing embodiments may be implemented by a program instructing relevant hardware of the terminal device. The program may be stored in a computer-readable storage medium. The storage medium may include a flash disk, a read-only memory (ROM), a random access memory (RAM), a magnetic disk, an optical disk, and the like.

According to still another aspect of the embodiments of the present disclosure, an electronic device configured to implement the foregoing data processing method is further provided. As shown in FIG. 12, the electronic device includes: a processor 1202, a memory 1204, and a transmission apparatus 1206. The memory stores a computer program, and the processor is configured to perform steps in any one of the foregoing method embodiments by using the computer program.

In an embodiment, the electronic device may be located in at least one of multiple network devices in a computer network.

In an embodiment, the transmission apparatus 1206 is configured to obtain a target data sequence, the target data sequence including N data groups sorted in a chronological order, N being greater than 1.

The processor may be configured to perform the following step by using the computer program:
processing, according to an i^{th} data group among the N data groups, processing results of a target neural network model for the i^{th} data group, and a processing result of the target neural network model for a j^{th} piece of data in an (i+1)^{th} data group, a (j+1)^{th} piece of data in the (i+1)^{th} data group by using the target neural network model, to obtain a processing result of the target neural network model for the (j+1)^{th} piece of data in the (i+1)^{th} data group, i being greater than or equal to 1 and less than N, and j being greater than or equal to 1 and less than Q, Q being a quantity of pieces of data in the (i+1)^{th} data group.

A person of ordinary skill in the art may understand that, the structure shown in FIG. 12 is only illustrative. The electronic device may also be a terminal device such as a smartphone (such as an Android mobile phone or an iOS mobile phone), a tablet computer, a palmtop computer, a mobile Internet device (MID), or a PAD. FIG. 12 does not constitute a limitation on the structure of the electronic device. For example, the electronic device may further include more or fewer components (such as a network interface) than those shown in FIG. 12, or have a configuration different from that shown in FIG. 12.

The memory 1204 may be configured to store a software program and module, for example, a program instruction/module corresponding to the data processing method and apparatus in the embodiments of the present disclosure. The processor 1202 runs the software program and module stored in the memory 1204, to implement various functional applications and data processing, that is, implement the foregoing data processing method. The memory 1204 may include a high-speed random memory, and may also include a nonvolatile memory, for example, one or more magnetic storage apparatuses, a flash memory, or another nonvolatile solid-state memory. In some embodiments, the memory 1204 may further include memories remotely disposed relative to the processor 1202, and the remote memories may be connected to a terminal by using a network. Examples of the network include, but are not limited to, the Internet, an intranet, a local area network, a mobile communication network, and a combination thereof.

The transmission apparatus 1206 is configured to receive or transmit data by using a network. Specific examples of the foregoing network may include a wired network and a wireless network. In an example, the transmission apparatus 1206 includes a network interface controller (NIC). The NIC may be connected to another network device and a router by using a network cable, so as to communicate with the Internet or a local area network. In an example, the transmission apparatus 1206 is a radio frequency (RF) module, which communicates with the Internet in a wireless manner.

The sequence numbers of the foregoing embodiments of the present disclosure are merely for description purpose but do not imply the preference among the embodiments.

When the integrated unit in the foregoing embodiments is implemented in a form of a software functional unit and sold or used as an independent product, the integrated unit may be stored in the foregoing computer-readable storage medium. Based on such an understanding, the technical solutions of the present disclosure essentially, or the part contributing to the related art, or the entire or some of the technical solutions may be implemented in a form of a software product. The computer software product is stored in a storage medium and includes several instructions for instructing one or more computer devices (which may be a personal computer, a server, a network device, or the like) to perform all or some of the steps of the methods described in the embodiments of the present disclosure.

In the foregoing embodiments of the present disclosure, the descriptions of the embodiments have respective focuses. For a part that is not described in detail in an embodiment, refer to related descriptions in other embodiments.

In the several embodiments provided in the present disclosure, it is to be understood that, the disclosed client may be implemented in another manner. The described apparatus embodiment is merely exemplary. For example, the unit division is merely logical function division and may be other division during actual implementation. For example, multiple units or components may be combined or integrated into another system, or some features may be ignored or not performed. In addition, the coupling, or direct coupling, or communication connection between the displayed or discussed components may be the indirect coupling or communication connection by means of some interfaces, units, or modules, and may be electrical or of other forms.

The units described as separate components may or may not be physically separate, and components displayed as units may or may not be physical units, may be located in one position, or may be distributed on multiple network units. Some or all of the units may be selected according to actual needs to achieve the objectives of the solutions of the embodiments.

In addition, functional units in the embodiments of the present disclosure may be integrated into one processing unit, or each of the units may be physically separated, or two or more units may be integrated into one unit. The integrated unit may be implemented in the form of hardware, or may be implemented in a form of a software functional unit.

The foregoing descriptions are exemplary implementations of the present disclosure. A person of ordinary skill in the art may further make several improvements and refinements without departing from the principle of the present disclosure, and the improvements and refinements shall fall within the protection scope of the present disclosure.

## Claims

1. A data processing method, performed by a server, the method comprising:
obtaining a target data sequence, the target data sequence comprising N data groups sorted in a chronological order, N being greater than 1; and
processing, according to an i^{th} data group among the N data groups, processing results of a target neural network model for the i^{th} data group, and a processing result of the target neural network model for a j^{th} piece of data in an (i+1)^{th} data group, a (j+1)^{th} piece of data in the (i+1)^{th} data group by using the target neural network model, to obtain a processing result of the target neural network model for the (j+1)^{th} piece of data in the (i+1)^{th} data group, i being greater than or equal to 1 and less than N, and j being greater than or equal to 1 and less than Q, Q being a quantity of pieces of data in the (i+1)^{th} data group.

2. The method according to claim 1, wherein the processing, according to an i^{th} data group among the N data groups, processing results of a target neural network model for the i^{th} data group, and a processing result of the target neural network model for a j^{th} piece of data in an (i+1)^{th} data group, a (j+1)^{th} piece of data in the (i+1)^{th} data group by using the target neural network model comprises:
processing the i^{th} data group among the N data groups and the processing results of the target neural network model for the i^{th} data group by using a target self-attention model in a target processing model, to obtain second feature information;
processing the second feature information and third feature information by using a first gate in the target processing model, to obtain first feature information, the first feature information being intra-group feature information of the (i+1)^{th}data group, the third feature information being intra-group feature information of the i^{th} data group, the first gate being configured to control a proportion of the second feature information outputted to the first feature information and a proportion of the third feature information outputted to the first feature information; and
processing, according to the first feature information and the processing result of the target neural network model for the j^{th} piece of data in the (i+1)^{th} data group, the (j+1)^{th} piece of data in the (i+1)^{th} data group by using the target neural network model.

3. The method according to claim 2, wherein the processing, according to the first feature information and the processing result of the target neural network model for the j^{th} piece of data in the (i+1)^{th} data group, the (j+1)^{th} piece of data in the (i+1)^{th} data group by using the target neural network model comprises:
processing the first feature information and the (j+1)^{th} piece of data in the (i+1)^{th} data group by using a second gate, to obtain a target parameter, the second gate being configured to control a proportion of the first feature information outputted to the target parameter and a proportion of the (j+1)^{th} piece of data outputted to the target parameter; and
processing the target parameter by using the target neural network model.

4. The method according to any one of claims 1 to 3, wherein after the target data sequence is obtained, the method further comprises:
applying a target sliding window that slides at a target stride on the target data sequence to obtain the N data groups.

5. The method according to any one of claims 1 to 4, wherein the obtaining a target data sequence comprises:
obtaining target video data, the target video data comprising N video frame groups sorted in a chronological order, and the target video data being used for recognizing an action performed by a target object in the target video data; and
the method further comprises:
determining first probability information according to a processing result for at least one video frame in at least one of the N video frame groups, the first probability information representing probabilities that the action performed by the target object is respective reference actions in a reference action set; and
determining, according to the first probability information, that the action performed by the target object is a target action in the reference action set.

6. The method according to any one of claims 1 to 4, wherein the obtaining a target data sequence comprises:
obtaining target text data, the target text data comprising at least one sentence, the at least one sentence comprising N phrases arranged in an order, and the target text data being used for recognizing an emotion type expressed by the target text data; and
the method further comprises:
determining second probability information according to a processing result for at least one word in at least one of the N phrases, the second probability information representing probabilities that the emotion type expressed by the target text data is respective reference emotion types in a reference emotion type set; and
determining, according to the second probability information, that the emotion type expressed by the target text data is a target emotion type in the reference emotion type set.

7. A data processing apparatus, comprising:
a communication module, configured to obtain a target data sequence, the target data sequence comprising N data groups sorted in a chronological order, N being greater than 1; and
a processing module, configured to process, according to an i^{th} data group among the N data groups, processing results of a target neural network model for the i^{th} data group, and a processing result of the target neural network model for a j^{th} piece of data in an (i+1)^{th} data group, a (j+1)^{th} piece of data in the (i+1)^{th} data group by using the target neural network model, to obtain a processing result of the target neural network model for the (j+1)^{th} piece of data in the (i+1)^{th} data group, i being greater than or equal to 1 and less than N, and j being greater than or equal to 1 and less than Q, Q being a quantity of pieces of data in the (i+1)^{th} data group.

8. The apparatus according to claim 7, wherein the processing module comprises:
a first processing unit, configured to process the i^{th} data group among the N data groups and the processing results of the target neural network model for the i^{th} data group by using a target self-attention model in a target processing model, to obtain second feature information;
a second processing unit, configured to process the second feature information and third feature information by using a first gate in the target processing model, to obtain first feature information, the first feature information being intra-group feature information of the (i+1)^{th} data group, the third feature information being intra-group feature information of the i^{th} data group, the first gate being configured to control a proportion of the second feature information outputted to the first feature information and a proportion of the third feature information outputted to the first feature information; and
a third processing unit, configured to process, according to the first feature information and the processing result of the target neural network model for the j^{th} piece of data in the (i+1)^{th} data group, the (j+1)^{th} piece of data in the (i+1)^{th} data group by using the target neural network model.

9. The apparatus according to claim 8, wherein the third processing unit is configured to:
process the first feature information and the (j+1)^{th} piece of data in the (i+1)^{th} data group by using a second gate, to obtain a target parameter, the second gate being configured to control a proportion of the first feature information outputted to the target parameter and a proportion of the (j+1)^{th} piece of data outputted to the target parameter; and
process the target parameter by using the target neural network model.

10. The apparatus according to any one of claims 7 to 9, further comprising:
a sliding module, configured to apply a target sliding window that slides at a target stride on the target data sequence to obtain the N data groups.

11. The apparatus according to any one of claims 7 to 10, wherein the communication module is configured to:
obtain target video data, the target video data comprising N video frame groups sorted in a chronological order, and the target video data being used for recognizing an action performed by a target object in the target video data; and
the apparatus further comprises:
a first determining module, configured to determine first probability information according to a processing result for at least one video frame in at least one of the N video frame groups, the first probability information representing probabilities that the action performed by the target object is respective reference actions in a reference action set; and determine, according to the first probability information, that the action performed by the target object is a target action in the reference action set.

12. The apparatus according to any one of claims 7 to 10, wherein the communication module is configured to:
obtain target text data, the target text data comprising at least one sentence, the at least one sentence comprising N phrases arranged in an order, and the target text data being used for recognizing an emotion type expressed by the target text data; and
the apparatus further comprises:
a second determining module, configured to determine second probability information according to a processing result for at least one word in at least one of the N phrases, the second probability information representing probabilities that the emotion type expressed by the target text data is respective reference emotion types in a reference emotion type set; and determine, according to the second probability information, that the emotion type expressed by the target text data is a target emotion type in the reference emotion type set.

13. A storage medium, storing a computer program, the computer program being configured to perform the method according to any one of claims 1 to 6 when being run.

14. An electronic device, comprising a memory and a processor, the memory storing a computer program, and the processor being configured to perform the method according to any one of claims 1 to 6 by using the computer program.

15. A computer program product comprising instructions, the computer program product, when run on a computer, causing the computer to perform the data processing method according to any one of claims 1 to 6.
